# EUROPEAN PATENT APPLICATION

(11) **EP 4 711 254 A1**
(43) Date of publication of application: **18.03.2026**
(21) Application number: 24425044.5
(22) Date of filing: 16.09.2024
(51) Int. Cl.: B62J 7/04, B62J 7/08, A45C 13/38, B62B 1/14, B62B 1/26, B62B 3/14

(54) **LUGGAGE RACK FOR BICYCLES EQUIPPED WITH A PART THAT CAN BE DETACHED, EXTENDED AND USED AS A TROLLEY**

(71) Applicant: Thebellboy S.r.l., 48125 Ravenna (RA) (IT)
(72) Inventor: Gialli, Gabriele, 00042 Anzio (Roma) (IT)
(74) Representative: Stamerra, Valentina

(57) **Abstract**

Luggage rack for bicycles comprising an external tubular element (1) that can be telescopically extended by extracting the internal tubular elements associated to it (5) and (9), rotatably coupled to a base (27) fixed to a rear portion of a bicycle frame (8), running parallel to the frame and that can be reversed in an orthogonal direction to the frame characterised by the base (27) consisting of a removable part (22), arranged to support wheels (20), on which the external tubular element (1) is rotatably coupled and a lower fixed part (21), coupled to the bicycle, which can be separated from each other in a sliding manner.

## Description

Luggage rack for bicycles, provided with a detachable, extendable part that can be used as a trolley.

### FIELD OF APPLICATION

This invention in general concerns the sector of bicycles, and in particular refers to a luggage rack for bicycles, provided with a detachable part, extendable by means of a telescopic system, and usable as a trolley for transporting bulky items on the road.

### STATE OF THE ART

Anyone who uses a bicycle in a city knows that having a luggage rack is a fundamental choice to make the bicycle a truly flexible means of transport suitable for any use. Having a luggage rack that is suitable to carry out several functions is essential to be able to cycle to work, to school, to the station, to the airport, or more simply to the supermarket. With regard to bycicles the term transport is immediately associated with luggage racks, which fall into two broad categories: front or rear ones. The front ones are less widespread because the loaded weight makes the bicycle less manageable and also less safe.

This invention is one of the so-called rear-frame luggage racks, which can be fitted after purchase, or be integrated or semi-integrated to the rear frame of a bicycle.

Technically, luggage racks are mainly made of metal tubular elements, in some cases of steel but very often of aluminium. In some cases the tubular elements are replaced by solid steel rods of small diameter, which are less expensive but have lower load-bearing capacity and rigidity. The most widespread fastening system, including those fitted later, consists of threaded and reinforced holes drilled on the frame.

Of course, in the assembly operations which are almost always very simple, the manufacturer's instructions must be strictly followed, with particular care to tightening, because frames, apart from having specially reinforced areas, do not have any tolerance for errors, which is why luggage racks that are suited for one frame model are unlikely to be suited for another model. This, however, makes assembly and disassembly operations time-consuming and chaotic. Rear luggage racks have a fair number of accessories, another almost infinite sector, starting of course from the side bags that are attached with hooks, to lights, containers of different sizes that fit on slides arranged in the frame of the luggage rack itself, to spring-loaded, single or double-armed object holders that are used to hold objects placed on the luggage rack. Last, but certainly not least, are the seats for carrying children, which are also provided with a specific slide and other specific devices.

Among this variety of findings, the closest state of the art to the finding referred to is described in the following patent documents: IT 2022 000025014 (THE BELL BOY SRL [IT]) 5th January 2022 (2022-01-05); EP 2 799 317 A1 (FLEISCHMANN ANDREAS [DE]) 5th November 2014 (2014-11-05); EP 1 995 162 A2 (HALLAPURO ISMO [Fl]) 26th November 2008 (2008-11-26); US 3 873 127 A (MCNICHOL JR MURRAY C ET AL) 25th March 1975 (1975-03-25); DE 650 122 C (ALOIS STOELZLE; SIMON STOELZLE) 11th September 1937 (1937-09-11); FR 1476989 A (VEUVE L DENIS ET FILS ETS) 14th April 1967 (1967-04-14).

Documents IT 2022 000025014, EP 2 799317 A1 and EP 1 995 162 A2 speak of extendable luggage racks with a telescopic system, for portions of rear frames, and are placed on a portion of the rear frame, behind the saddle attachment of bicycles or e-bikes, characterised by comprising an external tubular element which is rotatably hinged, in a longitudinal direction, to the base of the rear frame where the external tubular element in resting position is parallel to the base, in a longitudinal direction, and in working position it is vertical, in a perpendicular direction to the above-mentioned base. Unlike the European documents, the Italian document (IT 2022 000025014) provides for the possibility of extending the tubular element by one or more lengths, as it is provided with intermediate internal tubular elements that can be extracted by making them slide one from the other.

The last three above-mentioned documents speak of the working methods of a luggage rack, such as one which was described above, characterised by a first step in which the external tubular element is flipped from a longitudinal to a perpendicular position to the base of the rear frame part.

The finding referred to aims at improving the above-mentioned findings by providing a luggage rack provided with a detachable, extendable part that can be easily used as a trolley for carrying the load from the bicycle to another means of transport. In this case, the luggage rack is transformed into a road trolley.

### TECHNICAL PROBLEM.

The main problem with known luggage racks is that they are fastened with screws to the frame and cannot be quickly detached for a fresh use. Those that do not have a coupling system with screws are not provided with an anti-theft system and cannot be left unattended on the bike, otherwise they risk being stolen. Furthermore, once the problem of detachment has been solved, for the trolley to work as such the tubular element that carries the load must be extendable, so as to facilitate the grip by the person carrying the trolley and provided with a handle to facilitate its transport. The findings under consideration do not provide for a detachment and coupling system, nor for an anti-theft system, and provide for a telescopic extension limited to carry a parcel on a bicycle, but not on a road, because the height of the handle is much more important. The extension capacity of these findings, indeed, is not adequate to be gripped by a man, when the end is on the road.

These purposes are achieved by a bicycle or an e-bike luggage rack whose main characteristics are specified in the main product claim and in the method claim, while other characteristics are specified in the remaining claims.

### DESCRIPTION OF ONE OR MORE IMPLEMENTATION FORMS.

The solution underlying the invention is to improve a luggage rack incorporated to a portion of a rear bicycle frame. More specifically a luggage rack at least comprising an external tubular element (1) that can be extended telescopically, by means of other tubular elements that can be extracted from it, rotatably coupled to a rear portion of a bicycle frame (8), in a position that runs parallel to the frame and can be flipped orthogonally to the frame itself is characterised by its comprising a base (27) formed by a removable part (22) that can be provided with wheels (20) and a fixed lower part (21) that can be separated from each other in a sliding manner.

The removable part (22) is provided with a cover panel (14) of the tubular elements that works as a flat base for transporting the loads (10).

The fixed part (21), coupled to the rear portion of the frame (8) is provided with an insert (23), which is one with the fixed part (21), the which insert (23) adheres to the removable upper part (22) and the external tubular element (1) in resting position, on the said insert and on the removable part (22) it is placed a locking system (13) which, when in use, locks the fixed lower part (21) to the removable part (22) and the external tubular element (1).

The said locking system may be any of the known and commercially available locking systems, such as a key or a lever with a pin code, or an electrical impulse system, which works as an anti-theft device for the luggage rack when the bicycle is left unattended.

The said external tubular element (1) at least comprises two internal tubular elements (5) (9) which can be extended telescopically between a retracted position and an extended position. The tubular elements in a preferred implementation form are clamp-shaped provided with a handle (29).

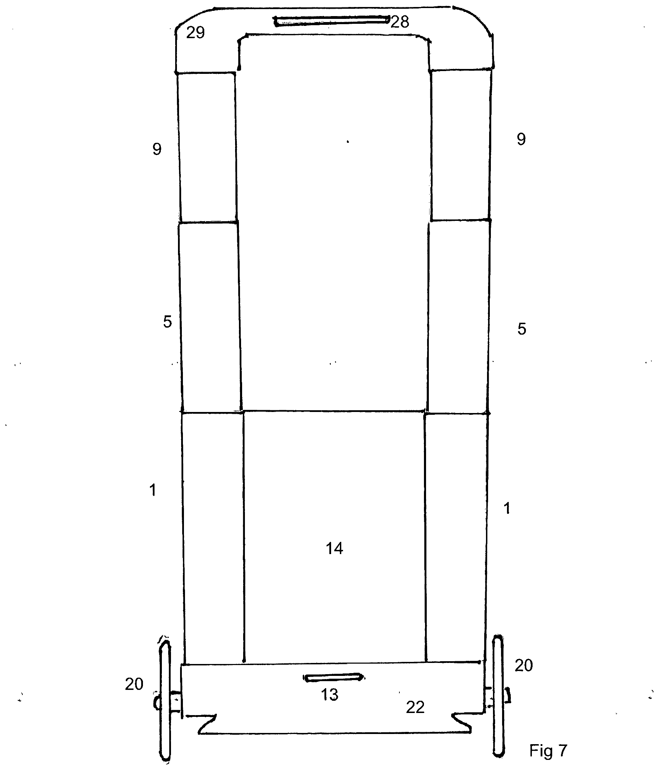

This configuration enables the extended telescopic extension of the luggage rack to be grabbed when it is removed from the bicycle and used as a trolley (fig. 7).

The handle is provided with a slot (28) for the passage of a belt (6) to secure the load (10) to the trolley, by means of a system to be shown later.

The external tubular element (1) is extensible by at least comprising two internal tubular elements (5) (9) secured to each other in a sliding manner: the former (5) to the external tubular element (1) and the latter (9) to the intermediate tubular element (5).

Thanks to this combination of characteristics, the finding referred to in the position of the external tubular element retracted and extended longitudinally with respect to the base (27), has an appearance and a dimension quite similar to the traditional ones, conceived for the transport of small objects.

In a flipped position, the luggage rack has all the characteristics of a luggage rack typical of a load-carrying bicycle, of the known types. In a position in which the removable part (22) is provided with wheels (20) and is detached and the tubular element has a maximum extension (fig. 7), the luggage rack can be used as a trolley for transporting objects on the road.

The external tubular element (1) and the internal tubular elements (5) are set up so as to extend between a retracted and an extended position, with variable intermediate heights, so that they can adapt to transport objects of different heights.

The base (27) of the finding, in the area where it impacts with the portion of the rear frame (8) consisting of a flat surface (2) made up of crossbeams (3) and spars (4) comprises a soft rubber cladding (15), capable of adapting to the different designs of the frames, taking their shape. Furthermore, this material has the advantage of preventing vibrations by absorbing them and preventing contact wear between the base (27) and the frame (2) of the bicycle.

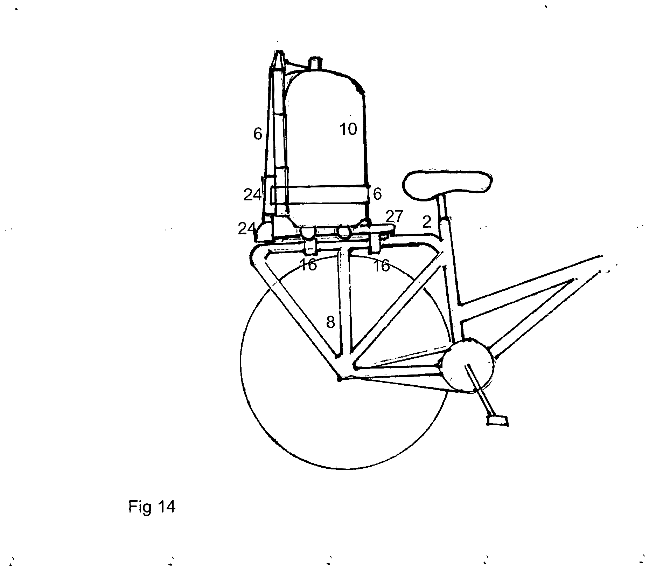

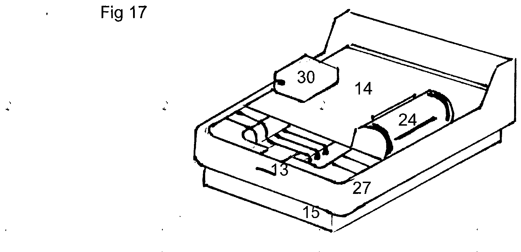

The base (27) includes brackets (16) passing under the frame (2), which are used to secure the finding to the flat surface (2) of the frame, through coupling means, such as for example screws (19), which fasten the brackets (16) to the base (27). The brackets comprise a soft rubber cladding (17) to prevent friction wear with the bicycle frame. There are several holes (18) for the screws (19), more than the traditional four, to allow for coupling, regardless of the type of design of the flat surface (2) and regardless of the distances of the crossbeams (3) and spars (4) that could prevent their fastening. (figs. 14 and 17). This set up enables the finding and the relative universal coupling system to be suitable for the various rear frame designs of bicycles on the market.

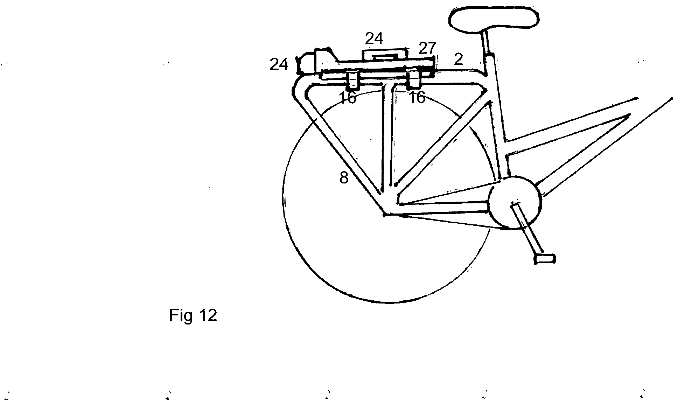

In a preferred form of implementation, the screws are only accessible when the tubular element is in vertical working position, orthogonal to the base (27). When the external tubular element (1) is in resting position parallel to the base (27) (fig. 12), the luggage rack cannot be removed from the frame, as in this position the finding can be locked by the locking system (13) with a key or a lever with pin code or other of the known ones. The known luggage racks are provided with belts (6) whose role is to secure the load (10) to the tubular elements. The finding referred to at least comprises one adjusting and locking system (24) of the said belts (6), mounted on the external tubular element (1). In a preferred form of implementation, the adjusting and locking systems (24) of the belts (6) are two identical to each other, one mounted on the external tubular element (24) and one on the base (27) at the rear side.

The adjusting and locking system (24) comprises an automatic belt rewinding system (6) internally characterised by blade springs, a tensioning wheel (25) of the belts (6), a coupling system (7) (30) to fasten the belts and a release lever (26) of the belts (6) which enables them to be rewound when they are not coupled.

A first coupling system (7) is mounted on the base opposite the adjusting and locking system (24) mounted on the tubular element (1) whose belt (6) wraps the load (10) vertically and comprises several slots which are parallel to each other, at different distances, in one of which, depending on the different measures of the load thickness (10) (11), the belt (6) is passed through, and it stays locked due to the presence of a hook or a pin (7).

A second coupling system (30) is mounted on one of the long sides of the base (27) on which the adjusting and locking system is mounted, whose belt wraps the load horizontally.

The belt (6) that wraps the load vertically is passed through the handle (29) of the tubular element, through a slot (28) placed in it.

### Building types

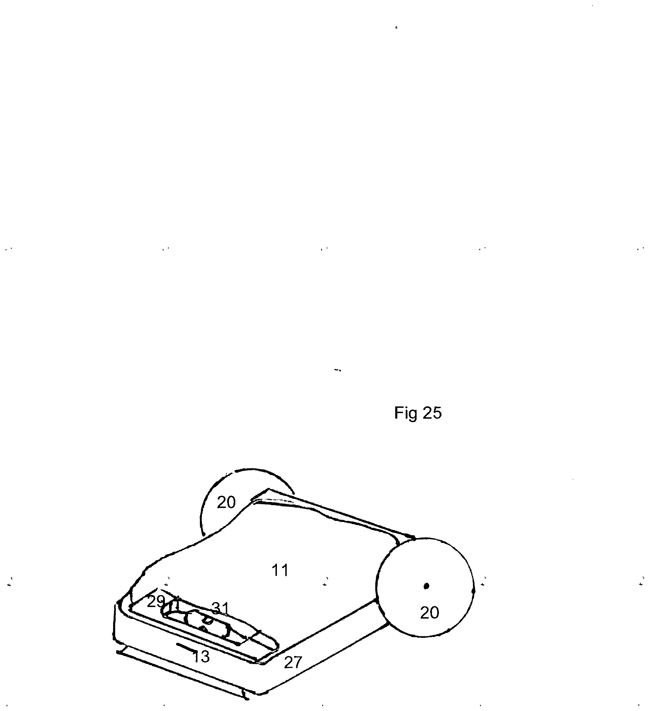

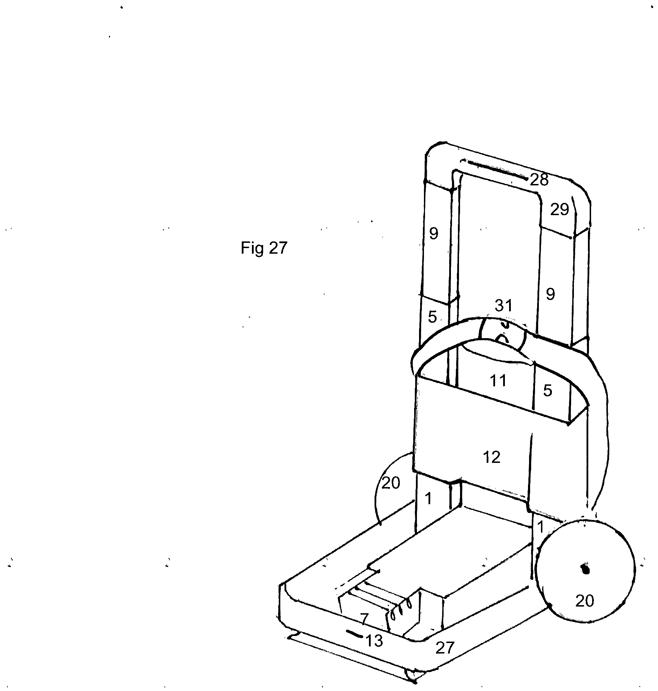

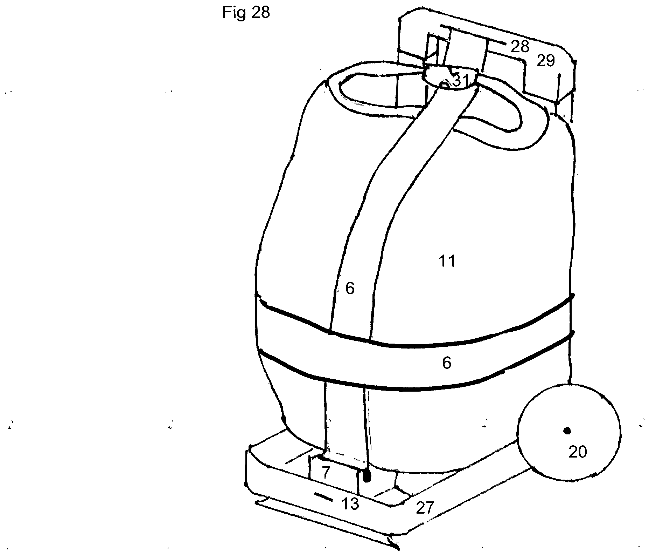

In one type of the finding (figs. 25, 26, 27 and 28) the luggage rack goes with a bag (11) provided with special loops (12) through which the tubular element (1) passes and the bag stays coupled to the base when the tubular element (1) is in resting position and the tubular element (1) and the two parts forming the base (27) are coupled by means of the insert (23) and locked by the above-mentioned locking system (13).

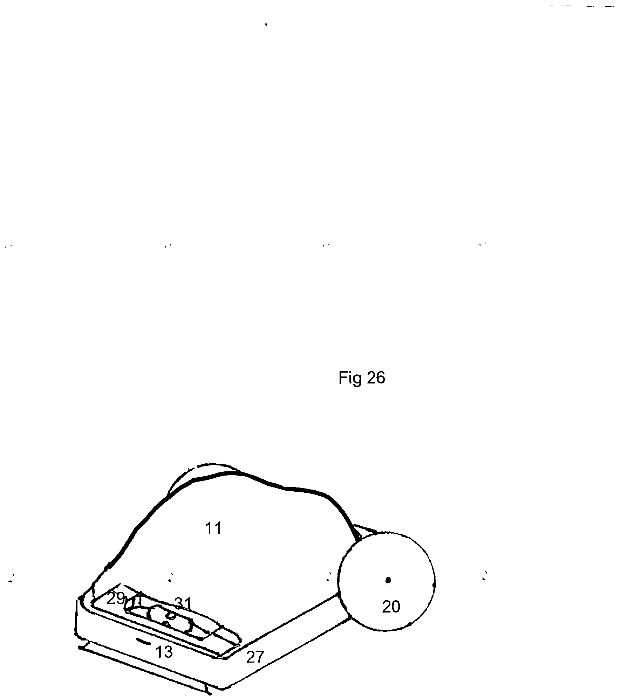

This bag (11) associated with the tubular element of the luggage rack, as shown in figs. 25 and 26, can also be safely left unattended even for its contents, it is indeed provided with clips (31) that cannot be removed from the closed tubular element below, thus preventing any access to the contents of the bag.

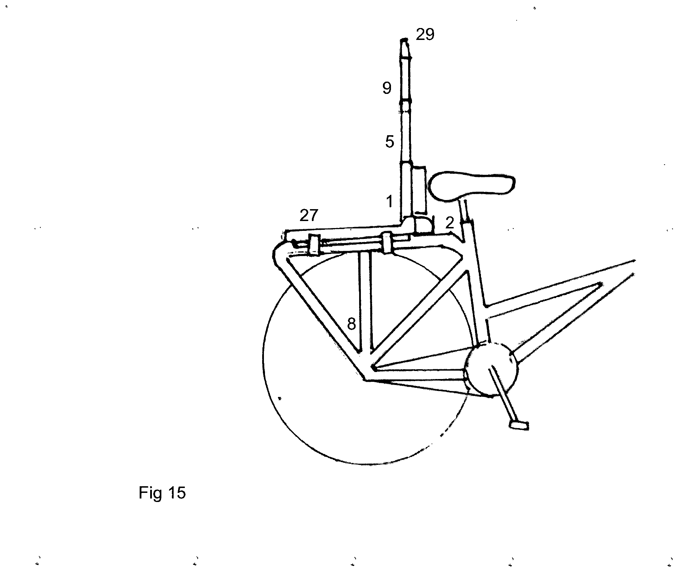

A further type is shown in fig. 15, in which the finding is mounted in a direction which is opposite to the riding one. This feature makes the finding even more versatile: bicycle luggage racks, their distances from the saddle and in general the design found on the market may in fact require assembling in one direction or the other (to facilitate the 90° opening/closing of the telescopic rods). If the finding is mounted as in fig. 15 the 90° rotation has indeed no hindrances due to the presence of the saddle as on the other hand could happen in the "standard" assembling.

### Working method

The above-mentioned finding has an innovative working method that enables it to be removed characterised by a first step in which the removable part (22) of the base (27), slides along the fixed part (21) up to their complete separation, so as to remove the first, and a second step in which the removable part is provided with wheels (20) and, once removed, the tubular elements are slid along one from the other so as to reach the maximum telescopic extension and work as a trolley.

In a third step the two parts are joined together, the external tubular element (1) placed parallel to the base, the insert (23) of the fixed part (21), adheres to the removable part (22) and the external tubular element (1), and through the lock (13) on the insert (23) the finding is locked.

In a fourth possible step the external tubular element (1) is joined to the bag (11), by means of loops (12) and the locking system (13) prevents the bag (11) from being extracted from the finding.

Further advantages and characteristics of the above-described bicycle luggage rack according to this invention will be apparent to the experts in the field from the following detailed and non-limiting description of its shape with reference to the attached drawings in which:

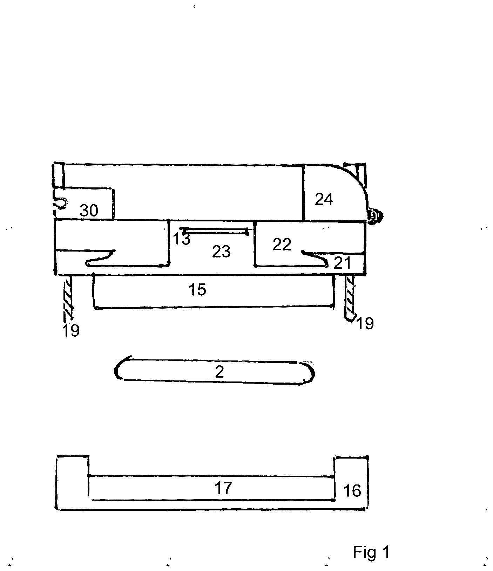

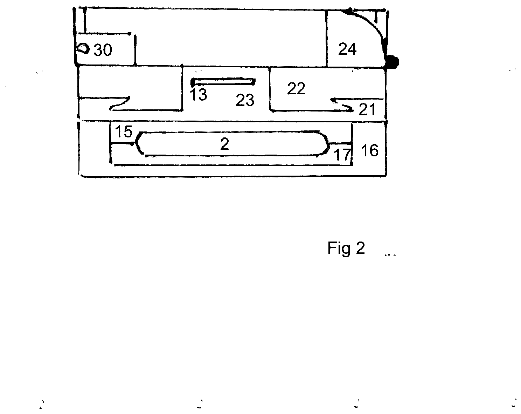

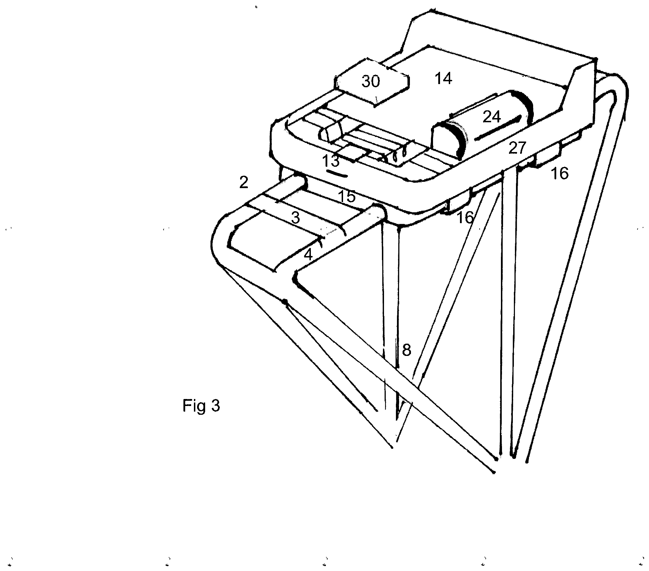

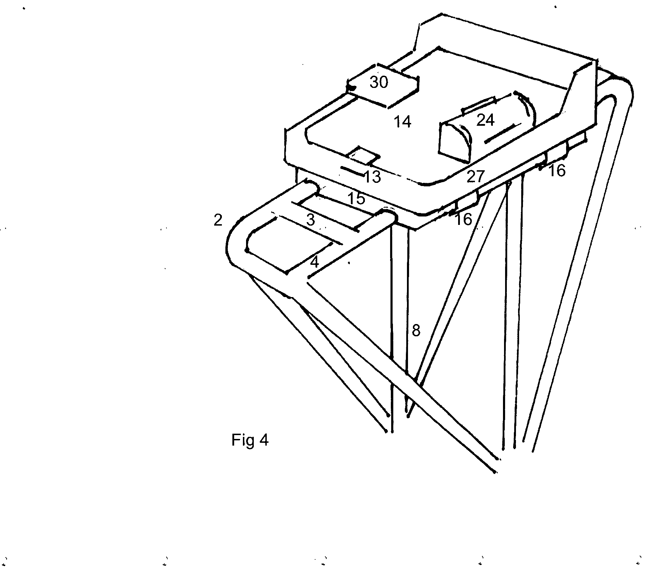

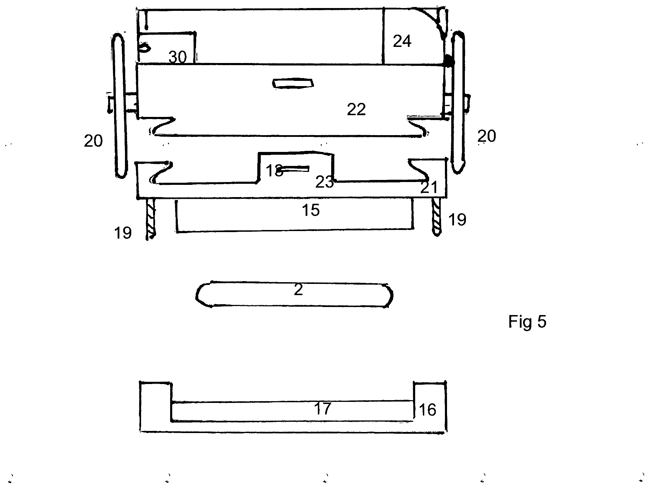

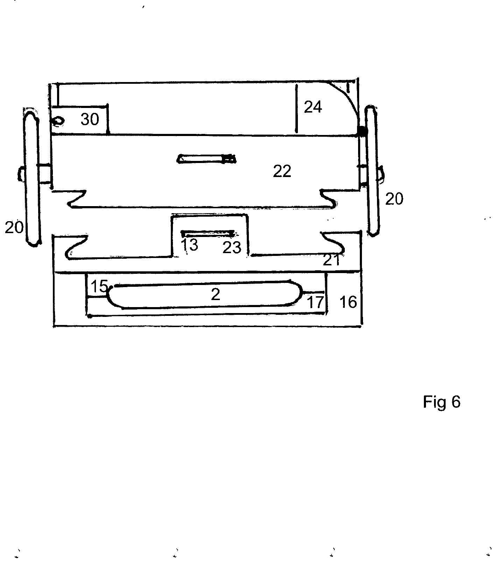

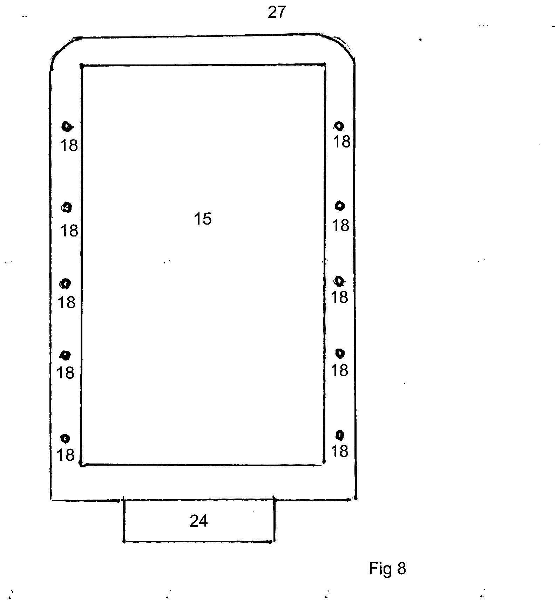

- Figs. 1 to 8 show the luggage rack without wheels: fig. 1 shows the finding without wheels exploded front view; fig. 2 shows the finding assembled without wheels front view, figs. 3 and 4 show the finding assembled without wheels side view;
- Figs. 5 and 7 show the luggage rack highlighting the different parts forming the base and making the finding removable, convertible into a trolley and lockable by means of a locking system, in particular fig. 5 shows the finding with wheels exploded front view; fig. 6 shows the finding assembled with wheels front view; fig. 7 shows the finding disassembled and used as a trolley;

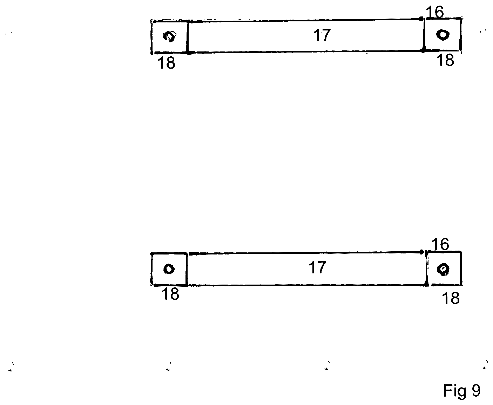

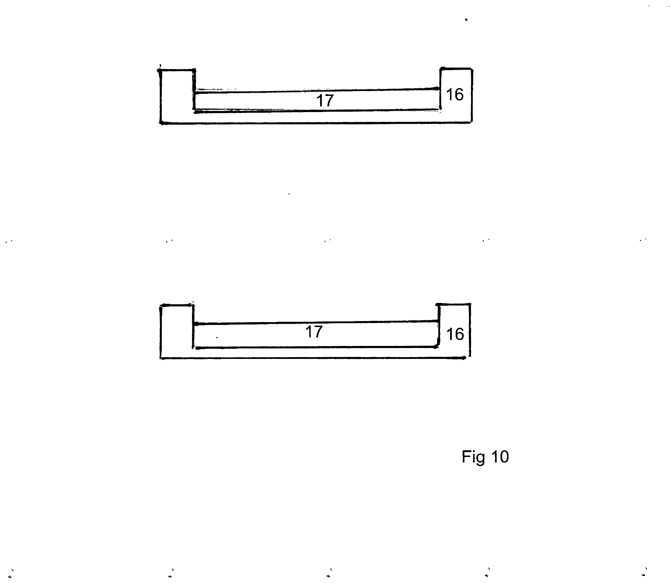

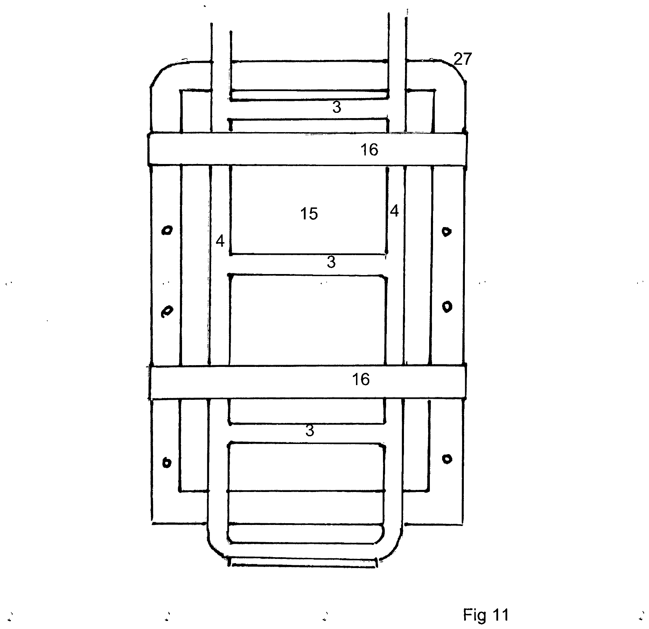

   Figures 8 to 10 show the means to assemble the finding to the bicycle frame, in particular fig. 8 shows a view of the finding from the bottom with the through holes for the screws; fig. 9 shows a detail of the fastening brackets (16), fig. 10 a detail of the fastening brackets side view, fig. 11 shows the assembled finding bottom view;

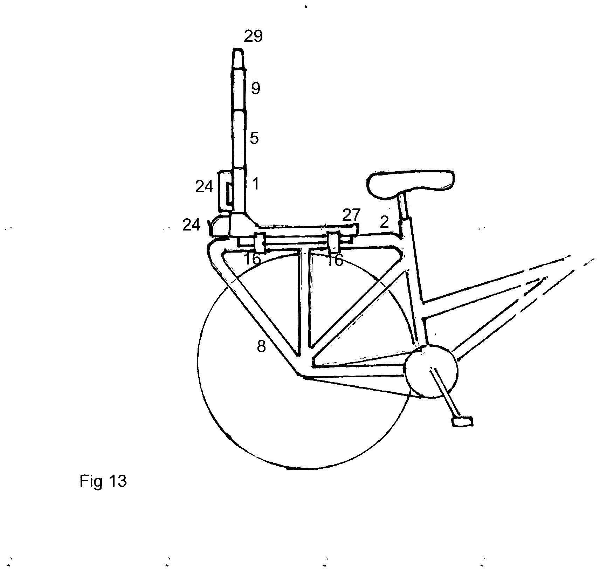

- Figures 12, 13, 14 and 15 show the finding on a bicycle, with four side views which show it in resting position (fig. 12), in working position (fig. 13), in working position with load (fig. 14), in working position, assembled in inverted position with the tubular element on the side of the bicycle saddle (fig. 15).

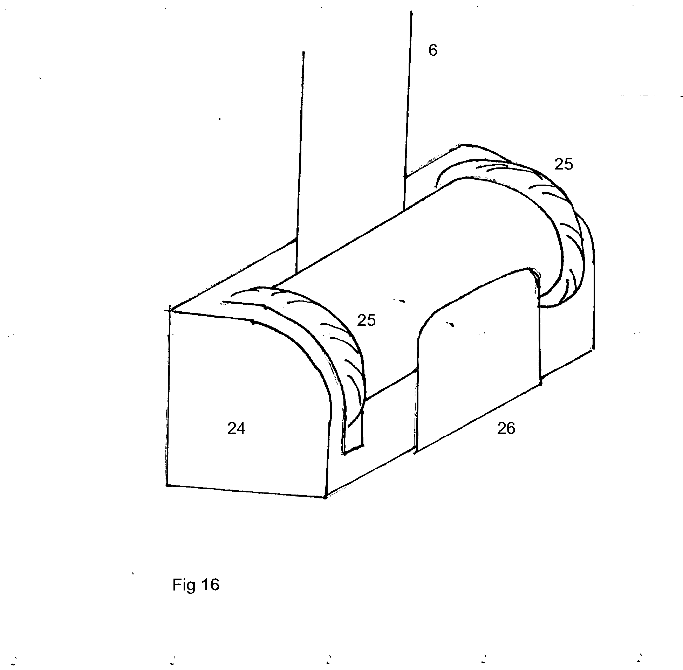

- Figure 16 shows the view of a detail of the system for fastening the load to the luggage rack.

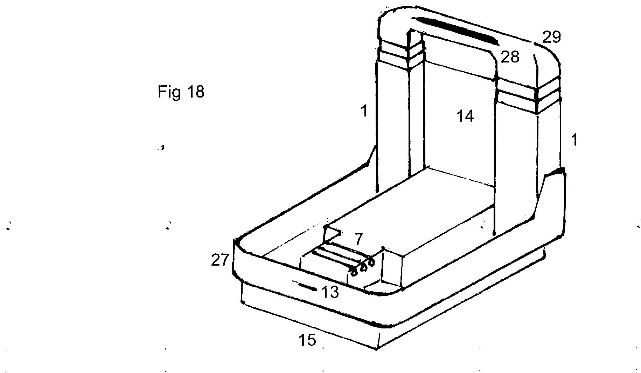

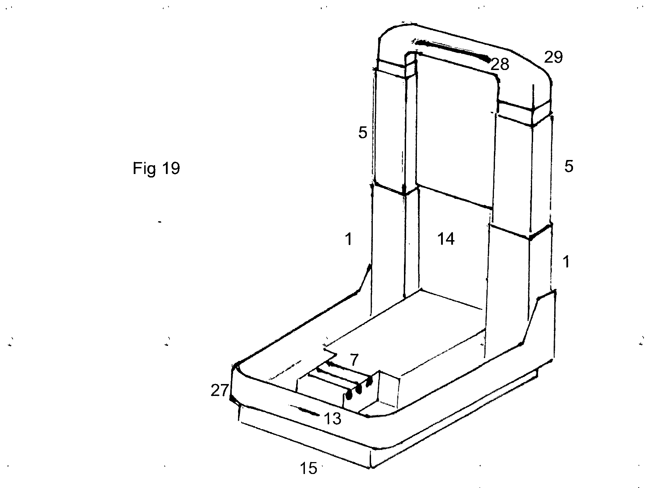

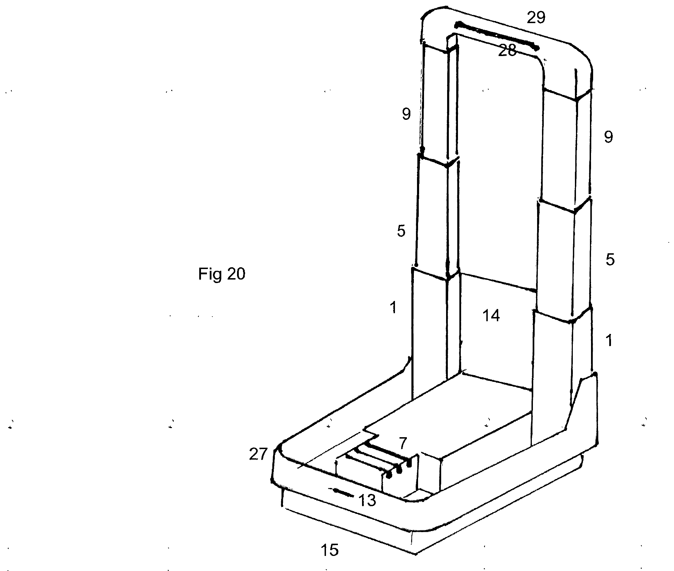

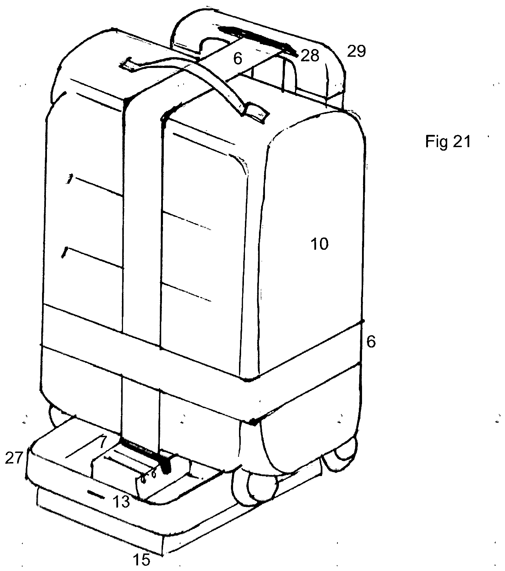

- Figures 17 to 21 show the front views of the luggage rack assembled without wheels: fig. 17 shows the finding at rest, figs. 18, 19 and 20 show the finding in loaded position with different extension degrees of the finding, fig. 21 shows the finding in working position with a load.

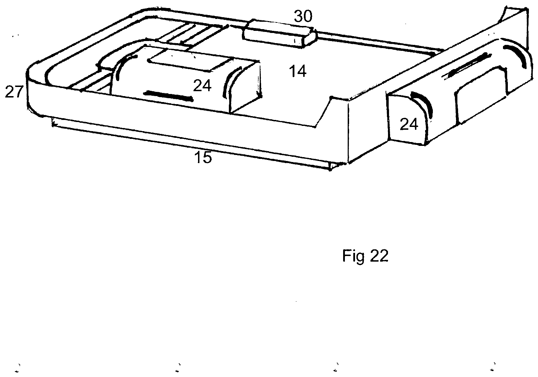

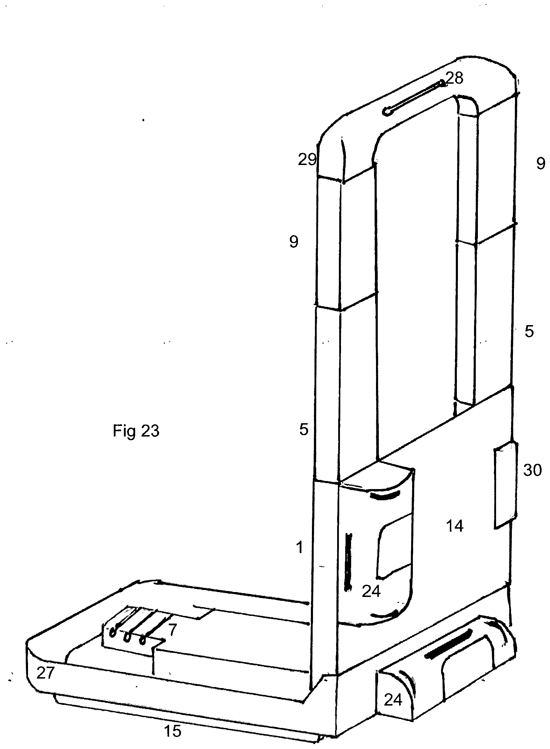

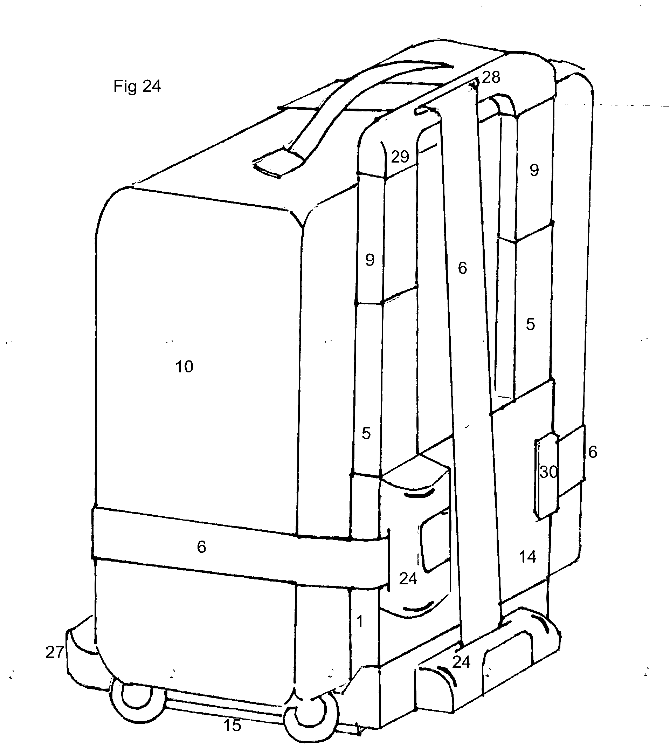

- Figs. 22 to 24 show the rear side views of the finding (fig. 22 with finding at rest, fig. 23 with finding extended, fig. 24 extended with load).
   With reference to the figures, the relevant bicycle frame section for loading, according to the invention is generally indicated by the reference number (8).
- Figs. 25 to 28 show the finding with the associated bag accessory With reference to the figures, the relevant bicycle frame section for loading, according to the finding is generally indicated by the reference number (8).

The frame (8) comprises in a known manner a flat surface (2), formed by crossbeams (3) and spars (4), comprising an external tubular element (1), the said external tubular element (1) has within it at least one internal tubular element (5), which is fastened to the former in a sliding manner. Within the latter there may be a second internal tubular element (9), which is fastened in a sliding manner to the first internal tubular element (5) up to a variable number of intermediate tubular elements, so as to make the vertical structure adaptable to support loads of different heights. The known luggage racks are provided with belts (6), that have coupling means to secure the load (10).

The innovative part consists of a special bracket shape of the tubular elements (1) (5) and (9), a base (27) consisting of two parts, one fixed (21) and one removable (22), which make a part of the luggage rack easily detachable. The fact that the removable part has wheels (20) and a flat surface (14), and that the bracket-shaped tubular elements are provided with a handle also enables the luggage rack to be used as a trolley. Another innovative characteristic is given by the special load (10) locking and adjusting system (24), which contains blade springs and is associated on the outside with a tensioning wheel (25) of the belts (6), a release lever (26) of the belts (6) and two belt coupling systems: a former coupling (30) arranged to couple the belt that wraps the load horizontally and a second coupling (7) arranged to couple the belt that wraps the load (10) vertically.

A further innovative characteristic is the locking and anti-theft system of the finding, which locks the removable part and the external tubular element (1), to which a bag (11) can also be added, to the fixed part (21) of the base (27). This system protects the removable part, but also the fixed part because the screws (19) for fastening the fixed part to the frame (8) can only be accessed if the external tubular element (1) is unlocked and placed across the base (27).

This invention has so far been described with reference to preferred creative forms. It is to be understood that there may be other creative forms that relate to the same invention field, as defined by the protection scope of the claims which follow.

## Claims

1. Luggage rack for bicycles comprising an external tubular element (1) that can be telescopically extended by extracting the internal tubular elements associated to it (5) and (9), rotatably coupled to a base (27) fixed to a rear portion of a bicycle frame (8), running parallel to the frame and that can be reversed in an orthogonal direction to the frame **characterised by** the base (27) consisting of a removable part (22), arranged to support wheels (20), on which the external tubular element (1) is rotatably coupled and a lower fixed part (21), coupled to the bicycle, which can be separated from each other in a sliding manner.

2. Bicycle luggage rack, referred to in the main claim, in which the fixed part (21) of the base (27) is provided with an insert (23) adhering to the removable upper part (22) and the external tubular element (1) in resting position, on which a locking system (13) is placed which, when in use, locks the fixed lower part (21) to the removable part (22) and to the external tubular element (1).

3. Luggage rack referred to any of the previous claims, also **characterised by** wheels (20) being fixed to the removable part (22) of the base, which when in use enable the removable part of the luggage rack to be used as a trolley.

4. Luggage rack referred to any of the previous claims in which the base (27) of the finding, right where it impacts the rear portion of the frame (8) comprises a soft rubber cladding (15) and through holes (18) for screws (19) **characterised by** their being in such a position that they are only accessible when the tubular element (1) is in a vertical working position, orthogonal to the base (27).

5. Luggage rack referred to claims 1 to 4 at least comprising one belt (6) adjusting and locking system (24), **characterised by** internal blade springs for rewinding the belt (6), a belt (6) tensioning wheel (25) and a belt (6) release lever (26).

6. The adjusting and locking system (24) referred to claim 5 is associated at least with one coupling system (7) mounted on the base (27), opposite the adjusting and locking system (24) comprising slots parallel to each other, within which the belt (6) that vertically wraps a load (10) is locked.

7. The adjusting and locking system (24) referred to claim 5 is associated with a second coupling system (30) mounted on one of the long sides of the base (27), laterally to the adjusting and locking system (24), comprising slots parallel to each other within which the belt (6) is locked by means of a hook placed on it (7).

8. Luggage rack referred to any of the previous claims coupled with a bag (11) provided with special loops (12) through which the tubular element (1) passes **characterised by** the fact that thanks to the locking system (13) it stays locked in an intermediate position between the fixed lower part (21) and the external tubular element (1) in a position which runs parallel to the removable part (22).

9. Working method of the luggage rack **characterised by** a former stage in which the removable part (22) of the base (27), provided with wheels slides along the fixed part (21) up to their reaching a complete separation, the tubular elements slide one out of the other so as to reach the maximum telescopic extension and enable the luggage rack to be used as a trolley.

10. Working method of the luggage rack **characterised by** a latter stage in which the two parts of the base (27) are joined together and the external tubular element (1), with a potential bag (11) going around it, is placed parallel to the base, **characterised by** the fact that by acting on the lock (13) to be found on the insert (23) and on the removable part (22) the finding is locked.
